(19) **Europäisches Patentamt**
**European Patent Office**
**Office européen des brevets**

(11) **EP 3 021 130 B1**

(12) **FASCICULE DE BREVET EUROPEEN**

(45) Date de publication et mention
de la délivrance du brevet:
**25.04.2018 Bulletin 2018/17**

(51) Int Cl.:
***G01S 5/06*** *(2006.01)*    ***G01S 7/02*** *(2006.01)*

(21) Numéro de dépôt: **15194317.2**

(22) Date de dépôt: **12.11.2015**

(54) **PROCÉDÉ ET SYSTÈME POUR LA LOCALISATION D'UN ÉMETTEUR**

VERFAHREN UND SYSTEM ZUR LOKALISIERUNG EINES SENDERS

METHOD AND SYSTEM FOR LOCATING A TRANSMITTER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.11.2014 FR 1402560**

(43) Date de publication de la demande:
**18.05.2016 Bulletin 2016/20**

(73) Titulaire: **THALES**
**92400 Courbevoie (FR)**

(72) Inventeurs:
• **MICHOUX, Marc**
**49309 CHOLET (FR)**
• **YWANNE, Frédérique**
**92622 GENNEVILLIERS CEDEX (FR)**
• **MORINIERE, Marc**
**49309 CHOLET (FR)**

• **COUPECHOUX, Pierre**
**31300 TOULOUSE (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**US-A1- 2006 273 960     US-A1- 2011 170 444**

• **DON J TORRIERI: "Statistical Theory of Passive
Location Systems", IEEE TRANSACTIONS ON
AEROSPACE AND ELECTRONIC SYSTEMS,
IEEE SERVICE CENTER, PISCATAWAY, NJ, US,
vol. AES-10, no. 2, 1 mars 1984 (1984-03-01),
pages 183-198, XP011167896, ISSN: 0018-9251**

## Description

L'invention concerne un procédé et un système pour la localisation d'un ou plusieurs émetteurs radioélectriques ou acoustiques.

Le principe des méthodes hyperboliques par différence de temps d'arrivée ou TDOA (Time Differential Of Arrival) consiste à mesurer la différence du délai de propagation d'un signal sur N systèmes de réception à des positions différentes et qui sont synchronisés par le même signal de référence (PPS du GPS - Global Positioning Satellite - par exemple). L'émetteur se trouvera alors à l'intersection des hyperboles ayant pour foyer les N récepteurs. Les méthodes connues de l'art antérieur, reposent notamment sur le calcul des différences de temps d'arrivée (TDOA) par inter corrélation des signaux entre eux ou par différences d'arrivée (TOA ou Time Of Arrival) en mettant en oeuvre des algorithmes de localisation hyperbolique utilisant une combinaison unique de mesures TDOA; on peut citer en particulier le procédé de Torrieri connu de l'homme du métier, qui utilise une résolution approchée d'un problème de moindres carrés non linéaires, pour estimer la position de l'émetteur à partir de ces TDOA.

La demande de brevet US 2006/0273960 porte uniquement sur la sélection des mesures TDOA à exploiter pour la localisation, mais ne décrit pas l'étape de localisation elle-même.

La demande de brevet US 2011/0170444 présente une méthode de localisation qui n'utilise pas de mesure TDOA.

Malgré les avantages procurés par les méthodes de l'art antérieur, ces dernières présentent certains inconvénients. Par exemple, pour calculer la position d'un émetteur radio dans un système avec N stations réceptrices, l'algorithme de Torrieri considère seulement (N-1) TDOA entre deux stations en utilisant systématiquement une numérotation de station de type 1-2, 2-3, et ainsi de suite jusqu'à (N-1)-N. Cette approche n'exploite pas toute l'information disponible, seulement N-1 TDOA parmi les N(N-1)/2 possibles et, le choix de la combinaison unique des couples de stations peut ne pas être pertinent. L'approche utilisant une combinaison unique de N-1 couples de stations n'est pas optimale en localisation TDOA pour différentes raisons: les mesures de TDOA étant réalisées par inter corrélation des signaux reçus sur un couple de stations, elles ne sont pas redondantes et au contraire les N(N-1)/2 mesures de TDOA selon l'invention comportent de l'information exploitable pour la localisation. Le fait de se restreindre à N-1 mesures ne permet pas d'exploiter toute l'information disponible au niveau des données mesurées. De plus, le choix dans l'utilisation d'une combinaison unique de couples de stations peut ne pas être pertinent en fonction de la géométrie du déploiement, des niveaux des signaux reçus ou bien d'erreurs de datation sur certaines stations.

Le procédé et le système selon l'invention reposent notamment sur l'utilisation de plusieurs combinaisons de mesures TDOA exploitant un ensemble de N(N-1)/2 mesures, où N le nombre de stations présentes dans un réseau, afin de minimiser l'influence d'un choix particulier comme dans l'art antérieur et d'écarter des combinaisons qui conduiraient à des localisations aberrantes.

L'invention concerne un procédé pour localiser un dispositif émetteur à partir de N stations dans un réseau de communications, chacune des stations étant équipées d'au moins un récepteur, en utilisant au moins un référentiel commun pour la datation, à toutes les N stations, le réseau comprenant une station maître adaptée à gérer les mesures d'instant d'arrivée, caractérisé en ce qu'il comporte au moins les étapes suivantes :

- déclencher une ou plusieurs acquisitions synchronisées sur N stations pour une fréquence donnée, une largeur de bande et un instant donné t, lesdites valeurs étant choisies en fonction d'un dispositif émetteur d'intérêt caractérisé par sa fréquence, sa largeur de bande,
- pour une acquisition :

  - calculer les N(N-1)/2 mesures de retard de temps d'arrivée TDOA pour les N(N-1)/2 couples possibles de stations,
  - choisir un nombre P de mesures parmi les M=N(N-1)/2 mesures, avec 3<P<N(N-1)/2, et former K vecteurs de mesures associées aux K combinaisons possibles de P parmi M avec :

$$K = \frac{M!}{P!(M-P)!}$$

  - pour chacun des K vecteurs, estimer une valeur de localisation élémentaire du dispositif émetteur par minimisation d'un critère quadratique prenant en compte une matrice correspondant à la covariance des P mesures de retard de temps d'arrivée, et par itération en partant d'une première valeur d'un vecteur $\vec{X}_0$ de position initiale de l'émetteur, la position est située aussi près que possible du minimum recherché puis en itérant sur la première estimation en estimant successivement des localisations permettant de faire diminuer le critère à minimiser jusqu'à vérifier une valeur seuil,
- calculer une valeur de localisation fusionnée à partir des valeurs de localisation élémentaires estimées.

L'étape d'initialisation consiste, par exemple, à estimer une première localisation grossière de l'émetteur, soit grâce à une connaissance a priori de la zone de positionnement de l'émetteur, soit, à défaut, par un algorithme de localisation TDOA direct (intersection d'hyperboles).
Selon une variante de réalisation, dans le cas stationnaire, lorsque le dispositif émetteur ne change quasiment pas de position, le procédé comprend une étape d'estimation de la valeur de localisation à partir de toutes les valeurs de localisation estimées au cours de plusieurs acquisitions.
Selon une variante de réalisation, le procédé va minimiser pour le calcul de localisation un critère quadratique défini comme :

$$\left(\vec{T}-\vec{T}(\vec{X})\right)^{T}\Sigma^{-1}\left(\vec{T}-\vec{T}(\vec{X})\right)=\left(\vec{T}-H\frac{\vec{D}}{c}\right)^{T}\Sigma^{-1}\left(\vec{T}-H\frac{\vec{D}}{c}\right),$$

où

c est la célérité des ondes électromagnétiques,
$\vec{T}(\vec{X})$ est le vecteur modèle (taille P) de l'observation, permettant de relier analytiquement le vecteur de mesures TDOA théorique à la position de l'émetteur $\vec{X}$,
$\vec{D}$ le vecteur de taille N, dont les composantes sont les distances du point de localisation $\vec{X}$ aux stations,
$H$ est une matrice rectangulaire P x N déterministe, constituée de 1, de -1 et de 0, permettant de passer des mesures d'instants d'arrivée à des mesures de différences de temps d'arrivée avec la relation analytique suivante

$$\vec{T}\left(\overline{X}\right)=H.\frac{\vec{D}}{c},$$

$\Sigma$ : correspond à la matrice de pondération PxP du critère correspondant à la covariance des P mesures de TDOA.

La matrice de covariance associée à P mesures TDOA peut alors s'écrire sous la forme générale suivante :

$$\Sigma \approx \Lambda_{P}(\sigma^{2}_{TDOA_{1}},...,\sigma^{2}_{TDOA_{P}})+H\Lambda_{N}(\sigma^{2}_{TOA_{1}},...,\sigma^{2}_{TOA_{N}})H^{T}$$

où :

$\Lambda_{P}(\sigma^{2}_{TDOA_{1}},...,\sigma^{2}_{TDOA_{P}})$ désigne une matrice diagonale de taille (PxP) dont les termes diagonaux s'écrivent $\sigma^{2}_{TDOA_{i}}$ avec i allant de 1 à P,

$\sigma^{2}_{TDOA_{i}}$ est la variance de la ième mesure TDOA,

$\Lambda_{N}(\sigma^{2}_{TOA_{1}},...,\sigma^{2}_{TOA_{N}})$ désigne une matrice diagonale de taille (NxN) dont les termes diagonaux s'écrivent $\sigma^{2}_{TOA_{i}}$ avec i allant de 1 à N,

$\sigma^{2}_{TOA_{i}}$ est la variance de la mesure de datation sur la ième station.

La matrice de covariance peut aussi être déterminée en utilisant des mesures de retard d'arrivée et en définissant les termes diagonaux de la matrice de covariance $\Sigma$ correspondant aux variances de chacune des mesures TDOA :

$$Vi=\frac{1}{Nacqui}*\sum_{n=1}^{Nacqui}\left(TDOA_{i,n}-\overline{TDOA_{i}}\right)^{2}$$

avec

$N_{acqui}$ le nombre d'acquisitions prises en compte pour le calcul de la variance $TDOA_{i,n}$ correspond à la $n_{ème}$ valeur obtenue à la nième acquisition du ième TDOA correspondant au ième couple de stations, $\overline{TDOA_i}$ correspond à la moyenne, sur les $N_{acqui}$ acquisitions des mesures du ième TDOA.

Selon une variante du procédé, lors de l'étape d'initialisation de la première localisation, on calcule la valeur d'initialisation $\vec{X}_0$ à partir d'une information a priori sur la localisation du dispositif émetteur ou à partir de mesures TDOA permettant de déterminer automatiquement une valeur d'initialisation.

La valeur d'initialisation $\vec{X}_0$ est, par exemple, déterminée à partir du vecteur de mesures TDOA, par un algorithme pseudo-linéaire PSL, en exécutant les étapes suivantes :

- on choisit une station de référence j, typiquement celle de plus fort SNR ou jugée la plus fiable,
- le vecteur d'état inconnu à estimer devient Y=(xsj,ysj,Rsj)$^T$ où Rsj est la distance de l'émetteur et (xsj,ysj) ses coordonnées, référencées par rapport à la station de référence j,
- le vecteur de pseudo-mesures M est constitué de termes s'écrivant : $\frac{1}{2}\left[D_{ij}^2 - \left(cTDOA_{ij}\right)^2\right]$ où $D_{ij}$ est la distance séparant les stations i,j et $TDOA_{ij}$ est le retard mesuré entre les signaux reçus sur ces stations i et j, de sorte qu'on a la relation linéaire : M = A Y, où A est une matrice, constituée des coordonnées des stations relativement à la station j de référence, et des termes ($cTDOA_{ij}$) issus des mesures de retard,
- l'estimation du vecteur inconnu Y se fait alors par résolution classique d'un problème de moindres carrés linéaires,
- on vérifie la pertinence des composantes de la solution Y, en vérifiant la cohérence de la distance estimée Rsj avec les coordonnées estimées (xsj,ysj) ; en vérifiant que Rsj est positif et n'est pas trop éloigné de $\sqrt{x_{sj}^2 + y_{sj}^2}$ ,
- en cas de pertinence, l'estimation de la position de l'émetteur se déduit directement du vecteur Y,
- en cas de non pertinence, l'algorithme peut être relancé avec une autre station de référence.

Le procédé peut utiliser comme algorithme itératif un algorithme pour lequel chaque itération permet de calculer, à partir d'un vecteur $\vec{X}_k$, un nouveau vecteur $\vec{X}_{k+1}$, de la façon suivante :

$$\overrightarrow{x_{k+1}} = \overrightarrow{x_k} + c \, (F^T \, H^T \, \Sigma^{-1} \, H \, F)^{-1} \, F^T \, H^T \, \Sigma^{-1} \, (\vec{T} - \frac{H \, \vec{D}}{c})$$

où F est une matrice jacobienne, calculée au point $\vec{X}_k$, des temps de trajet entre le dispositif émetteur à localiser et les N stations réceptrices, avec

$$F = \begin{matrix} \dfrac{(\vec{x}_k - \vec{S}_1)^T}{D_1} \\ . \\ . \\ \dfrac{(\vec{x}_k - \vec{S}_N)^T}{D_N} \end{matrix}$$

La ligne i de la matrice est le vecteur unitaire dirigé de la station i vers l'estimation courante, on calcule cette équation au point $\vec{X}_0$ ce qui fournit un nouveau point de localisation $\vec{X}_1$ qui sera utilisé à l'itération suivante pour obtenir un nouveau point $\vec{X}_2$ qui sera lui-même utilisé pour obtenir un nouveau point jusqu'à détecter une convergence ou une divergence.

Selon une variante de mise en oeuvre, on localise le dispositif émetteur à partir d'un ensemble de localisations élémentaires en exécutant les étapes suivantes :

- à chaque acquisition à partir des K localisations élémentaires,

- filtrer des valeurs de localisations aberrantes, localisations isolées ou éloignées de la moyenne des localisations obtenues,
- calculer un barycentre par moyenne des localisations élémentaires retenues, correspondant à une valeur de localisation du dispositif émetteur à localiser,
- associer à cette valeur une probabilité d'erreur CEP déterminée de la manière suivante : soit un ensemble de localisations élémentaires Locx,y pris pour une acquisition, B le barycentre des localisations Locx,y retenues, CEP 50% de Locx,y est le rayon du cercle, centré sur B, qui contient la moitié des localisations de Locx,y.

On peut aussi localiser le dispositif émetteur à partir d'un ensemble de localisations élémentaires en exécutant les étapes suivantes :

- au bout de N$_{acqui}$ acquisitions et dans le cas stationnaire,
- filtrer des valeurs de localisations aberrantes, localisations isolées ou éloignées de la moyenne des localisations obtenues,
- calculer un barycentre par moyenne des localisations élémentaires retenues, correspondant à une valeur de localisation du dispositif émetteur à localiser,
- associer à cette valeur une probabilité d'erreur CEP déterminée de la manière suivante : soit un ensemble de localisations élémentaires Locx,y pris pour une acquisition, B le barycentre des localisations Locx,y retenues, CEP 50% de Locx,y est le rayon du cercle, centré sur B, qui contient la moitié des localisations de Locx,y.

D'autres caractéristiques et avantages du procédé et du système selon l'invention apparaîtront mieux à la lecture de la description qui suit donnée à titre illustratif et nullement limitatif annexé des figures qui représentent :

- La figure 1, un exemple de système pour la mise en oeuvre du procédé selon l'invention,
- La figure 2, une illustration d'un calcul par barycentre.

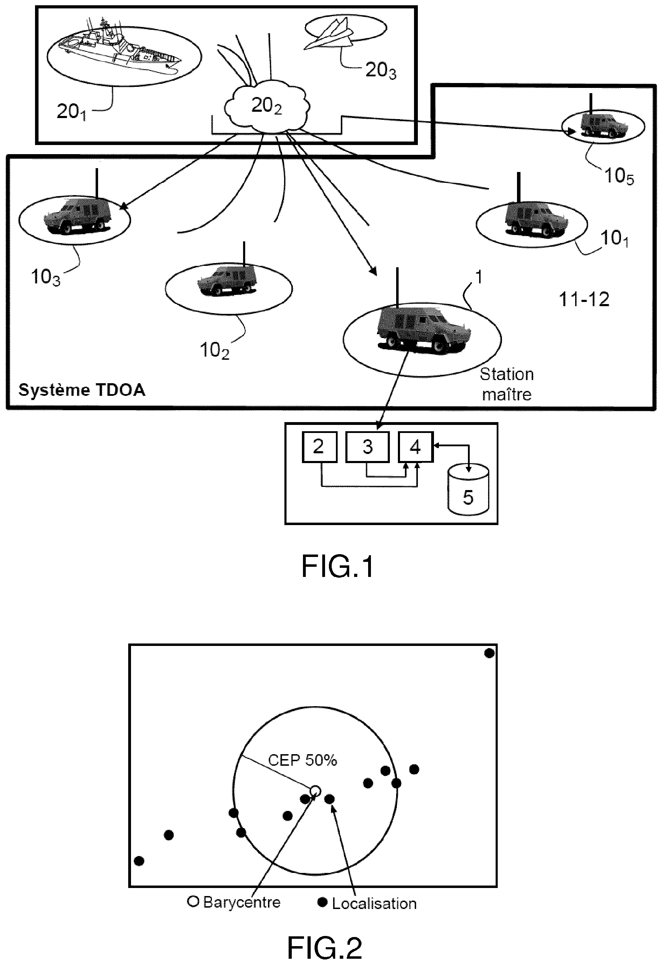

La figure 1 représente un exemple de système dans lequel peut être implémenté le procédé selon l'invention. Une station maître 1 est équipée de moyens de communication, un émetteur radio 2 et un récepteur radio 3 ainsi qu'un processeur 4 adapté à exécuter les étapes du procédé selon l'invention. Une zone mémoire 5 permet le stockage des données et des mesures effectuées. La station maître est reliée (par liaison radioélectrique) à plusieurs stations dites esclaves 10i équipées chacune d'un récepteur radioélectrique, 11, 12, dans cet exemple. Les N stations de réception sont synchronisées grâce à un référentiel de datation précise commun à toutes les stations, tel qu'une horloge précise, commune à toutes les stations, typiquement un signal de référence GPS. La station maître 1 va séquencer et paramétrer les acquisitions sur chaque station esclave : les acquisitions se faisant sur une liste de fréquences centrales discrètes représentant les émetteurs d'intérêt (émetteur 20) à localiser.

La station maître 1 émet un ordre d'acquisition des signaux sur une fréquence Fc, une largeur de bande BW, une durée T (caractérisation de l'émetteur d'intérêt). La station maître reçoit les N signaux acquis par chacune des stations esclaves 10n utilisées dans le système TDOA, les stations étant en liaison radio par exemple avec la station maître. Au cours du temps, il est possible de disposer de plusieurs acquisitions successives sur Fc/BW à t$_1$, t$_2$, ..., t$_{Nacqui}$. Si l'émetteur que l'on cherche à détecter est mobile, ou cas « non stationnaire », les acquisitions seront traitées indépendamment les unes des autres. Dans le cas contraire, cas « stationnaire », le procédé va pouvoir exploiter l'historique des acquisitions afin d'améliorer la détection et la localisation de l'émetteur visé. Ces deux exemples seront détaillés dans la suite de la description.

Le procédé selon l'invention va exécuter au moins les trois étapes explicitées ci-après pour chaque acquisition de N signaux commandée par le dispositif maître, à un instant t donné, pour une fréquence donnée, ces valeurs étant choisies en fonction de l'émetteur que l'on souhaite localiser, les caractéristiques de l'émetteur (Fc, BW) étant connues a priori, ou bien résultant d'une étape préalable de mesures de signaux présents dans une zone donnée.

**Etape 1 : Calcul des temps de retard TDOA et filtrage**

Au cours d'une première étape, la station maître va calculer tous les temps de retard TDOA et appliquer éventuellement un filtrage. La station maître calcule tous les temps de retard TDOA entre tous les N(N-1)/2 couples de stations possibles. Par exemple, dans le cas où N=5 stations, l'ensemble des 10 couples de station est regroupé dans le tableau I suivant :

| Numéro TDOA | Couple de stations associées |
| --- | --- |
| 1 | (1,2) |

(suite)

| Numéro TDOA | Couple de stations associées |
|---|---|
| 2 | (1,3) |
| 3 | (1,4) |
| 4 | (1,5) |
| 5 | (2,3) |
| 6 | (2,4) |
| 7 | (2,5) |
| 8 | (3,4) |
| 9 | (3,5) |
| 10 | (4,5) |

Pour chaque couple de signaux, correspondant à un couple de stations, l'estimation du temps de retard $\tau$ est effectuée par le calcul d'une inter corrélation (généralement normalisée) entre les signaux et utilise une interpolation pour affiner la recherche du maximum.

A l'issue de ce calcul, le procédé dispose au maximum de N(N-1)/2 mesures de TDOA, c'est-à-dire autant que de couples de stations possibles parmi les N stations.

Chaque mesure de TDOA, $\tau$, est accompagnée d'une note de corrélation et d'une valeur du rapport signal à bruit associé. Certaines mesures seront éliminées si la note de corrélation ou si la valeur du rapport signal à bruit associé est trop faible pour que la mesure TDOA soit exploitable. Ce filtrage est réalisé par la station maître qui mémorise des valeurs de seuils d'exploitation et applique un algorithme de seuillage connu de l'Homme du métier.

### Etape 2 : Choix des combinaisons de mesures de TDOA

La deuxième étape consiste à choisir un nombre P de mesures TDOA parmi les M disponibles (M $\leq$ N(N-1)/2).

Le procédé peut fonctionner avec un nombre P compris entre 3 et M, mais la valeur usuellement choisie est comprise dans l'intervalle défini par ces deux extrêmes et résulte d'un compromis entre précision d'une localisation élémentaire et représentativité statistique, visant une exploitation judicieuse de toutes les informations disponibles. Une fois le nombre P choisi, le procédé établit toutes les combinaisons possibles de P mesures TDOA parmi les M disponibles soit un nombre K de combinaisons valant :

$$K = C_M^P = \frac{M!}{P!(M-P)!}$$

A titre d'illustration, dans le cas de N=5 stations et de M=10 mesures TDOA, ce qui correspond à la disponibilité de tous les couples de stations disponibles, le tableau II ci-après regroupe le nombre de K combinaisons obtenues en fonction du nombre P choisi, P allant de 3 à M=10 :

| P | Nombre de combinaisons K |
|---|---|
| 3 | 120 |
| 4 | 210 |
| 5 | 252 |
| 6 | 210 |
| 7 | 120 |
| 8 | 45 |
| 9 | 10 |
| 10 | 1 |

A titre d'exemple, dans le cas où l'on choisit de retenir toutes les combinaisons comprenant chacune P=7 mesures de TDOA, on retrouve les 120 combinaisons possibles, tableau III:

| Numéro de la combinaison | TDOA | | | | | | | | | |
|---|---|---|---|---|---|---|---|---|---|---|
| | 1 | 2 | 3 | 4 | 5 | 6 | 7 | 8 | 9 | 10 |
| 1 | X | X | X | X | X | X | X | | | |
| 2 | | | X | X | X | | X | X | X | X |
| 3 | | X | | X | X | | X | X | X | X |
| 4 | X | X | X | | | X | X | X | | X |
| ... | | | | | | | | | | |
| 120 | | | | X | X | X | X | X | X | X |

Une fois le nombre P de mesures choisi, on forme les K vecteurs de mesures $\vec{T}$ associés aux K combinaisons possibles de P parmi M. Chaque vecteur $\vec{T}$ contient les P mesures TDOA associées à la combinaison de couples de stations considérée et a donc pour dimension Px1. Dans l'exemple donné ci-dessus, P=7.

### Etape 3 : Calcul des K localisations élémentaires

La troisième étape consiste à calculer une localisation de l'émetteur, séparément pour chacune des K combinaisons donc pour chacun des K vecteurs de mesures $\vec{T}$ issus de l'étape 2 précédente, ceci pour une acquisition de signaux donnée. Chaque localisation est par exemple obtenue en exécutant un algorithme de moindres carrés pondérés non linéaires dont un exemple est donné ci-après.

<u>Pour chacun des K vecteurs $\vec{T}$ formés:</u>

Soit $\vec{T}$ le vecteur de P mesures TDOA correspondant à une combinaison considérée.

Le calcul de localisation est réalisé par minimisation d'un critère quadratique, constitué par la distance de Mahalanobis connue de l'homme du métier sur les mesures : on cherche le vecteur position $\vec{X}$ de l'émetteur minimisant le critère quadratique suivant:

$$\left(\vec{T}-\vec{T}(\vec{X})\right)^{T}\Sigma^{-1}\left(\vec{T}-\vec{T}(\vec{X})\right)=\left(\vec{T}-H\frac{\vec{D}}{c}\right)^{T}\Sigma^{-1}\left(\vec{T}-H\frac{\vec{D}}{c}\right)$$

où :

$c$ est la célérité des ondes électromagnétiques,

$\vec{T}(\vec{X})$ est le vecteur modèle (taille P) de l'observation, permettant de relier analytiquement le vecteur de mesures TDOA théorique à la position de l'émetteur $\vec{X}$,

$\vec{D}$ est le vecteur de taille N, dont les composantes sont les distances du point de localisation $\vec{X}$ aux stations,

$H$ : est une matrice rectangulaire P x N déterministe (constituée de 1, de -1 et de 0) permettant de passer des mesures d'instants d'arrivée à des mesures de différences de temps d'arrivée : la relation analytique suivante est vérifiée $\vec{T}(\vec{X}) = H.\frac{\vec{D}}{c}$, c

$\Sigma$ : correspond à la matrice de pondération PxP du critère. Pour optimiser le calcul de localisation au sens de la vraisemblance (sous l'hypothèse gaussienne), cette matrice doit correspondre à la covariance des P mesures de TDOA.

Ce qui conduit à une Dimension de la matrice E :

| Matrice | taille |
|---|---|
| $\Sigma$ | P*P |

Le calcul de localisation nécessite donc le calcul préalable (étape 3a) de la matrice $\Sigma$ associée au vecteur $\vec{T}$ de P mesures TDOA. Une fois ce calcul effectué, on calculera le point de localisation (étape 3b) par minimisation du critère présenté plus haut. Ces deux sous-étapes 3a et 3b sont décrites ci-après.

**Etape 3a : Calcul de la matrice de covariance $\Sigma$**

Le calcul de la matrice $\Sigma$ est effectué de différentes manières, selon le cas traité (stationnaire ou non), et dans le cas stationnaire selon que l'on dispose ou non d'un historique suffisant:

Cas non stationnaire ou cas stationnaire avec historique insuffisant:

Dans le cas où l'émetteur à localiser n'est pas fixe ou que l'on ne dispose pas d'un historique suffisant d'acquisitions préalables, la matrice de covariance est calculée de façon théorique comme décrit ci-après.

La matrice de covariance théorique PxP, associée à P mesures TDOA s'écrit sous la forme générale suivante :

$$\Sigma \approx \Lambda_P(\sigma^2_{TDOA_1},....,\sigma^2_{TDOA_P}) + H\Lambda_N(\sigma^2_{TOA_1},....,\sigma^2_{TOA_N})H^T$$

où :

$$\Lambda_P(\sigma^2_{TDOA_1},....,\sigma^2_{TDOA_P})$$

désigne une matrice diagonale de taille (PxP) dont les termes diagonaux s'écrivent $\sigma^2_{TDOA_i}$ avec i allant de 1 à P, avec $\sigma^2_{TDOA_i}$ la variance de la ième mesure TDOA (issue de l'inter-corrélation)

$$\Lambda_N(\sigma^2_{TOA_1},....,\sigma^2_{TOA_N})$$

désigne une matrice diagonale de taille (NxN) dont les termes diagonaux s'écrivent $\sigma^2_{TOA_i}$ avec i allant de 1 à N. $\sigma^2_{TOA_i}$ est la variance de la mesure de datation sur la ième station.

Dès lors que $\sigma^2_{TDOA_i}$ est non nulle, cette matrice est de rang P et est inversible.

En pratique, les valeurs de $\sigma^2_{TOA_i}$ sont des valeurs a priori, dépendant des moyens de datation utilisées (typiquement, erreur talon due à la précision du 1 PPS ou plus généralement de l'horloge commune de référence utilisée, ou bien précision de la chaîne d'acquisition de chaque station).

Les valeurs de $\sigma^2_{TDOA_i}$ sont soit des valeurs fixées a priori et basées sur l'expérience, soit des valeurs théoriques (par exemple les bornes de Cramer-Rao) issues d'un calcul et dépendant notamment du rapport signal à bruit reçu sur les stations (ce qui vise à favoriser les mesures effectuées avec les stations de plus fort rapport signal à bruit).

Dans le cas stationnaire où la matrice de covariance est estimée à partir de mesures acquises au cours du temps, on filtre les mesures « aberrantes » TDOA à partir de calcul statistique.

Cas stationnaire où l'on dispose d'un nombre suffisant d'acquisitions successives

Dans le cas stationnaire où l'on dispose de suffisamment d'acquisitions préalables (au moins 3), la matrice de covariance peut être affinée par un calcul de covariance empirique utilisant les mesures TDOA issues des acquisitions successives précédentes.

Le calcul de la matrice de covariance empirique est réalisé de la façon décrite ci-après.

Les termes diagonaux de la matrice de covariance $\Sigma$ correspondent aux variances de chacune des mesures TDOA et chacun de ces termes est calculé comme suit :

$$Vi = \frac{1}{Nacqui} * \sum_{n=1}^{Nacqui} \left( TDOA_{i,n} - \overline{TDOA_i} \right)^2$$

avec

Nacqui = nombre d'acquisitions prises en compte pour le calcul de la variance,

$TDOA_{i,n}$ = correspond à la $n_{ème}$ valeur (i.e. obtenue à la nième acquisition) du ième TDOA (correspondant au ième couple de stations parmi les M possibles),

$\overline{TDOA_i}$ = correspond à la moyenne, sur les Nacqui acquisitions des mesures du ième TDOA.

Une équation similaire fournit les termes croisés de la matrice de covariance (corrélation entre des mesures TDOA réalisées sur 2 couples distincts de stations).

Pour reprendre l'exemple de N=10 stations, lorsqu'au bout de *Nacqui* acquisitions ($\geq$ 3), on dispose de *Nacqui* échantillons TDOA1, TDOA2, ..., TDOA10 des 10 TDOA mesurés (1 TDOA pour chacun des 10 couples de station), on peut créer la matrice $\sum$ de covariance des TDOA (ici obtenue avec P=10), tableau IV :

| Matrice de covariance | | | | | | | | | |
|---|---|---|---|---|---|---|---|---|---|
| $V_{TDOA1}$ | $C_{TDOA1,TDOA2}$ | $C_{TDOA1,TDOA3}$ | $C_{TDOA1,TDOA4}$ | $C_{TDOA1,TDOA5}$ | $C_{TDOA1,TDOA6}$ | $C_{TDOA1,TDOA7}$ | $C_{TDOA1,TDOA8}$ | $C_{TDOA1,TDOA9}$ | $C_{TDOA1,TDOA10}$ |
| | $V_{TDOA2}$ | $C_{TDOA2,TDOA3}$ | $C_{TDOA2,TDOA4}$ | $C_{TDOA2,TDOA5}$ | $C_{TDOA2,TDOA6}$ | $C_{TDOA2,TDOA7}$ | $C_{TDOA2,TDOA8}$ | $C_{TDOA2,TDOA9}$ | $C_{TDOA2,TDOA10}$ |
| | | $V_{TDOA3}$ | $C_{TDOA3,TDOA4}$ | $C_{TDOA3,TDOA5}$ | $C_{TDOA3,TDOA6}$ | $C_{TDOA3,TDOA7}$ | $C_{TDOA3,TDOA8}$ | $C_{TDOA3,TDOA9}$ | $C_{TDOA3,TDOA10}$ |
| | | | $V_{TDOA4}$ | $C_{TDOA4,TDOA5}$ | $C_{TDOA4,TDOA6}$ | $C_{TDOA4,TDOA7}$ | $C_{TDOA4,TDOA8}$ | $C_{TDOA4,TDOA9}$ | $C_{TDOA4,TDOA10}$ |
| | | | | $V_{TDOA5}$ | $C_{TDOA5,TDOA6}$ | $C_{TDOA5,TDOA7}$ | $C_{TDOA5,TDOA8}$ | $C_{TDOA5,TDOA9}$ | $C_{TDOA5,TDOA10}$ |
| | | | | | $V_{TDOA6}$ | $C_{TDOA6,TDOA7}$ | $C_{TDOA6,TDOA8}$ | $C_{TDOA6,TDOA9}$ | $C_{TDOA6,TDOA10}$ |
| | Symétrie par rapport à la variance des résultats de covariance | | | | | $V_{TDOA7}$ | $C_{TDOA7,TDOA8}$ | $C_{TDOA7,TDOA9}$ | $C_{TDOA7,TDOA10}$ |
| | | | | | | | $V_{TDOA8}$ | $C_{TDOA8,TDOA9}$ | $C_{TDOA8,TDOA10}$ |
| | | | | | | | | $V_{TDOA9}$ | $C_{TDOA9,TDOA10}$ |
| | | | | | | | | | $V_{TDOA10}$ |

**Etape3b : calcul de localisation par minimisation du critère quadratique**

Le critère à minimiser faisant intervenir une fonction T(X) non linéaire, on est ramené à un problème de « moindres carrés non linéaires », et la minimisation est effectuée par un processus itératif qui nécessite un point d'initialisation $\vec{X}_0$ situé aussi près que possible du minimum recherché.

L'algorithme de minimisation du critère comporte donc deux grandes étapes :

- Une étape d'initialisation visant à estimer une première localisation de l'émetteur : $\vec{X}_0$, vecteur de position initiale de l'émetteur, située, par exemple aussi près que possible du minimum recherché,
- Une étape d'itération visant à affiner cette première estimation « grossière en utilisant d'abord le vecteur $\vec{X}_0$, puis en estimant successivement des localisations $\vec{X}_k$ permettant de faire diminuer le critère à minimiser.

Etape d'initialisation : calcul d'un vecteur initial $\vec{X}_0$

Plusieurs cas sont possibles selon le contexte. Si l'on est dans le cas stationnaire et que l'on dispose au préalable d'une localisation issue d'acquisitions précédentes, ou bien si l'on dispose d'une information a priori fiable sur la localisation de l'émetteur (zone de présence probable restreinte, localisation précédente pour un émetteur d'intérêt faiblement mobile), le vecteur de position initiale $\vec{X}_0$ est fixé à cette valeur préalable connue a priori. L'initialisation consiste, par exemple, à estimer une première localisation grossière de l'émetteur, soit grâce à une connaissance a priori de la zone de positionnement de l'émetteur, soit, à défaut, par un algorithme de localisation TDOA direct (intersection d'hyperboles).

Dans tout autre cas, le vecteur de position initiale est calculé à partir du vecteur de mesures TDOA, par un algorithme pseudo-linéaire PSL (Pseudo-Linear Estimator en anglais) permettant de déterminer automatiquement une valeur d'initialisation.

Cette grande famille d'algorithmes consiste à appliquer une transformation sur les mesures et/ou à transformer le vecteur d'état à estimer afin de se ramener à la résolution directe d'un problème de moindres carrés linéaires.

Dans le cas particulier de mesures de TDOA et d'au moins quatre stations :

- on choisit une station de référence j (typiquement, celle de plus fort SNR ou jugée la plus fiable),
- le vecteur d'état inconnu à estimer devient Y=(xsj,ysj,Rsj)$^T$ où Rsj est la distance de l'émetteur et (xsj,ysj) ses coordonnées, référencées par rapport à la station de référence j,
- le vecteur de pseudo-mesures M est constitué de termes s'écrivant : $\frac{1}{2}\left[D_{ij}^2 - \left(cTDOA_{ij}\right)^2\right]$ où $D_{ij}$ est la distance séparant les stations i,j et TDOA$_{ij}$ est le retard mesuré entre les signaux reçus sur ces stations i et j, de sorte qu'on a la relation linéaire : M = A Y, où A est une matrice, constituée des coordonnées des stations relativement à la station j de référence, et des termes ($cTDOA_{ij}$) issus des mesures de retard,
- l'estimation du vecteur inconnu Y se fait alors par résolution classique d'un problème de moindres carrés linéaires (A et M étant connues),
- on vérifie la pertinence des composantes de la solution Y, en vérifiant la cohérence de la distance estimée Rsj avec les coordonnées estimées (xsj,ysj) ; cette vérification se fait typiquement en vérifiant que Rsj est positif et n'est pas trop éloigné de $\sqrt{x_{sj}^2 + y_{sj}^2}$,
- en cas de pertinence, l'estimation de la position de l'émetteur se déduit directement du vecteur Y,
- en cas de non pertinence, l'algorithme peut être relancé avec une autre station de référence par exemple.

Cet algorithme pseudo-linéaire est sous-optimal au sens de la minimisation du critère précité mais il présente l'avantage d'une résolution directe basée sur les mesures TDOA. Cette première localisation sert à initialiser l'algorithme itératif de minimisation de moindres carrés non linéaires décrit ci-après. En l'absence d'information a priori précise ou d'une précédente localisation fiable de l'émetteur d'intérêt, l'utilisation de cet algorithme de recherche est préférable (point solution plus proche de la position de l'émetteur) à une initialisation aléatoire ou arbitraire.

A l'issue de cette étape d'initialisation, on dispose d'un premier point de localisation $\vec{X}_0$ qui va servir de point de départ à l'étape de minimisation du critère présenté plus haut.

Etape de minimisation du critère quadratique par itérations successives:

Dans cette étape, on cherche à calculer un point de localisation minimisant le critère quadratique défini plus haut, en partant du point de localisation initial $\vec{X}_0$.

De nombreux algorithmes de résolution de problème de moindres carrés non linéaires sont utilisables, pour peu qu'ils réussissent à minimiser le critère décrit plus haut.

Le procédé utilisé met par exemple en oeuvre un algorithme itératif du second ordre (de type Gauss-Newton, correspondant à des itérations successives d'un algorithme de type Torrieri), pour lequel chaque itération permet de calculer, à partir d'un vecteur $\vec{X}_k$ un nouveau vecteur $\vec{X}_{k+1}$ de la façon suivante :

$$\overrightarrow{x_{k+1}} = \overrightarrow{x_k} + c\, (F^T\, H^T\, \Sigma^{-1}\, H\, F)^{-1}\, F^T\, H^T\, \Sigma^{-1}\, (\vec{T} - \frac{H\,\vec{D}}{c})$$

où F est une matrice jacobienne, calculée au point $\vec{X}_k$, des temps de trajet entre la source et les N stations réceptrices. Cette matrice a pour dimension N x 2, et s'écrit :

$$F = \begin{array}{c} \dfrac{(\vec{x}_k - \vec{S}_1)^T}{D_1} \\[2mm] . \\ . \\[2mm] \dfrac{(\vec{x}_k - \vec{S}_N)^T}{D_N} \end{array}$$

La ligne $i$ de la matrice est le vecteur unitaire dirigé de la station $i$ vers l'estimation courante.

A la première itération, cette équation est calculée au point $\vec{X}_0$ et fournit un nouveau point de localisation $\vec{X}_1$ qui sera utilisé à l'itération suivante pour obtenir un nouveau point $\vec{X}_2$ etc. Ce calcul est ainsi itéré pour chaque nouvelle localisation $\vec{X}_k$ calculée, jusqu'à détecter une convergence ou une divergence.

Le procédé peut utiliser différents critères d'arrêt. Par exemple, on peut utiliser un seuil en distance entre plusieurs estimations de la position successives en dessous duquel on arrête les itérations. D'autres critères d'arrêt sont également utilisables (tels que décroissance relative du critère inférieur à un seuil, nombre d'itérations maximal, etc).

Les calculs décrits dans l'étape 3 sont appliqués à chacune des K combinaisons de TDOA, c'est-à-dire pour chacun des K vecteurs $\vec{T}$ de mesures TDOA.

A l'issue de cette étape 3, on dispose donc de K points de localisation par acquisition.

En cas d'échec de l'algorithme de localisation (par exemple, non convergence de l'algorithme de minimisation pour une combinaison de mesures donnée), il se peut que l'on dispose de moins de K localisations, ce nombre K constitue donc un maximum, mais c'est le nombre généralement obtenu en régime « nominal ».

**Etape 4 : Calcul d'une localisation fusionnée à partir des localisations élémentaires**

A l'entrée de la quatrième étape, on dispose donc de K points de localisation (au maximum) par acquisition, donc potentiellement de K x Nacqui points de localisations.

En reprenant l'exemple présenté plus haut (N=5, M=10, P=7), si on dispose d'une série de Nacqui=40 acquisitions pour le calcul de la position de l'émetteur, on a alors 40 acquisitions*120combinaisons = 4800 loc élémentaires au maximum.

| Combinaison Acquisition | 1 | 2 | 3 | ... | 120 |
|---|---|---|---|---|---|
| 1 | $LOC_{1,1}$ | $LOC_{1,2}$ | $LOC_{1,3}$ | ... | $LOC_{1,120}$ |
| 2 | $LOC_{2,1}$ | $LOC_{2,2}$ | $LOC_{2,3}$ | ... | $LOC_{2,120}$ |
| 3 | $LOC_{3,1}$ | $LOC_{3,2}$ | $LOC_{3,3}$ | ... | $LOC_{3,120}$ |
| . . . | . . . | . . . | . . . | . . . | . . . |
| 40 | $LOC_{40,1}$ | $LOC_{40,2}$ | $LOC_{40,3}$ | ... | $LOC_{40,120}$ |

L'étape 4 consiste à calculer :

- pour chaque acquisition : un seul point de localisation à partir des K localisations disponibles, assorti d'une zone d'incertitude (traduite sous forme de CEP),
- dans le cas stationnaire (émetteur fixe) et lorsque l'on dispose de $N_{acqui}$ acquisitions, un point de localisation résultant de la fusion des $N_{acqui}$ localisations obtenues au cours du temps.

A chaque acquisition, on a K au plus localisations élémentaires (une pour chacune des K combinaisons qui a abouti à une localisation) et on fusionne les localisations pour fabriquer une localisation de synthèse par acquisition : au bout de $N_{acqui}$ acquisitions, et dans le cas stationnaire, on peut encore affiner en utilisant les résultats de localisations obtenus au cours du temps, fusion des $N_{acqui}$ localisations de synthèse. Cette étape 4, présente la fusion des localisations à chaque acquisition pour obtenir une localisation de synthèse, puis le cas échéant, la fusion des $N_{acqui}$ localisations de synthèse obtenues au bout de $N_{acqui}$ acquisitions.

Calcul de la localisation de l'émetteur à partir des K (au plus) localisations élémentaires :

Pour chaque acquisition, on effectue les traitements suivants à partir des K localisations :

- Filtrage des localisations « aberrantes » par traitement de type « clustering » dont le principe est d'identifier et d'écarter - le cas échéant- les localisations isolées s'écartant de trop du groupe des localisations obtenues,
- calcul d'un barycentre en faisant la moyenne (éventuellement pondérée) des localisations élémentaires retenues.

Ce barycentre constitue la localisation finalement obtenue pour une acquisition donnée.
A ce résultat de localisation, on associe un CEP 50% (Circular Error Probability). Le calcul du CEP50% se fait, par exemple, de la manière suivante :

Soit un ensemble de localisations élémentaires Locx,y pris pour une acquisition. En notant B le barycentre des localisations Locx,y retenues. On appelle CEP 50% de Locx,y le rayon du cercle, centré sur B, qui contient la moitié des localisations de Locx,y.

Calcul de la localisation de l'émetteur à partir des Nacqui localisations (cas stationnaire) :

Dans le cas stationnaire où l'émetteur à localiser est fixe et plusieurs acquisitions sont disponibles, on applique le même type de calcul à partir des localisations obtenues à chaque acquisition, munies de leur CEP respectif:

- Filtrage des localisations « aberrantes » par traitement de type « clustering », dont le principe est d'identifier et d'écarter - le cas échéant- les localisations isolées s'écartant de trop du groupe des localisations obtenues,
- Calcul d'un nouveau barycentre éventuellement pondéré (barycentre « amélioré ») à partir des localisations retenues et calcul d'un nouveau CEP (CEP dit « amélioré »)

En reprenant l'exemple précédent (N=5, M=10, P=7, Nacqui=40), on obtient le type de résultats suivant, tableau V:

| Combinaison / Acquisition | 1 | 2 | 3 | ... | 120 | | Barycentre | CEP 50% |
|---|---|---|---|---|---|---|---|---|
| 1 | $LOC_{1,1}$ | $LOC_{1,2}$ | $LOC_{1,3}$ | ... | $LOC_{1,120}$ | | $B_1$ | $CEP_1$ |
| 2 | $LOC_{2,1}$ | $LOC_{2,2}$ | $LOC_{2,3}$ | ... | $LOC_{2,120}$ | | $B_2$ | $CEP_2$ |
| 3 | $LOC_{3,1}$ | $LOC_{3,2}$ | $LOC_{3,3}$ | ... | $LOC_{3,120}$ | | $B_3$ | $CEP_3$ |
| . | . | . | . | . | . | | . | . |
| . | . | . | . | . | . | | . | . |
| . | . | . | . | . | . | | . | . |
| 40 | $LOC_{40,1}$ | $LOC_{40,2}$ | $LOC_{40,3}$ | ... | $LOC_{40,120}$ | | $B_{40}$ | $CEP_{40}$ |
| | | | | | | | Barycentre brut | CEP 50% brut |
| | | | | | | | Barycentre amélioré | CEP 50% amélioré |

Dans ce tableau :

- Le barycentre brut correspond à la moyenne pondérée de tous les barycentres calculés à chaque acquisition
- Le CEP 50% brut est calculé à partir du barycentre brut.
- Le barycentre amélioré est calculé à partir des barycentres ayant un CEP50% associé < X m.
- Le CEP 50% est calculé à partir du barycentre amélioré en ne prenant que les CEP 50% < X.

X est une valeur seuil paramétrable selon le contexte.

L'utilisation de toutes les informations disponibles, du fait du calcul de tous les TDOA par inter corrélation, et de plusieurs combinaisons de mesures pour disposer d'une statistique permet d'améliorer la localisation et notamment de filtrer les localisations aberrantes. Elle multiplie le nombre de résultats de localisation, chaque localisation pouvant être considérée comme une localisation élémentaire, contribuant à un résultat de localisation de synthèse plus fiable et plus précis grâce à cette approche statistique.

**Revendications**

1. - Procédé pour localiser un dispositif émetteur (20i) à partir de N stations (10j) dans un réseau de communications, chacune des stations étant équipées d'au moins un récepteur (12), en utilisant au moins un référentiel de datation commun à toutes les N stations, le réseau comprenant au moins une station maître (1) adaptée à gérer des mesures d'instant d'arrivée, **caractérisé en ce qu'**il comporte au moins les étapes suivantes :

    • déclencher une ou plusieurs acquisitions synchronisées sur N stations pour une fréquence donnée, une largeur de bande et un instant donné t, lesdites valeurs étant choisies en fonction d'un dispositif émetteur d'intérêt **caractérisé par** sa fréquence, sa largeur de bande,
    • pour une acquisition :

        • calculer les N(N-1)/2 mesures de retard de temps d'arrivée TDOA entre tous les N(N-1)/2 couples de stations,
        • choisir un nombre P de mesures parmi les M=N(N-1)/2 mesures, avec 3<P<N(N-1)/2 et former K vecteurs de mesures associées aux K combinaisons possibles de P parmi M avec :

$$K = \frac{M!}{P!(M-P)!}$$

• pour chacun des K vecteurs, estimer une valeur de localisation élémentaire du dispositif émetteur par minimisation d'un critère quadratique prenant en compte une matrice correspondant à la covariance des P mesures de retard de temps d'arrivée et par itération en partant d'une première valeur d'un vecteur $\vec{X}_0$ de position initiale de l'émetteur, la position est située aussi près que possible du minimum recherché puis en itérant sur la première estimation en estimant successivement des localisations permettant de faire diminuer le critère à minimiser jusqu'à vérifier une valeur seuil,
• calculer une valeur de localisation fusionnée à partir des valeurs estimées de localisation élémentaire.

**2.** - Procédé selon la revendication 1 **caractérisé en ce que** dans un cas stationnaire pour des stations quasi immobiles, le procédé comprend en plus une étape de calcul d'une localisation à partir de toutes les localisations élémentaires estimées pour toutes les acquisitions.

**3.** - Procédé selon l'une des revendications 1 ou 2 **caractérisé en ce que** pour estimer une valeur de localisation, on minimise un critère quadratique défini comme :

$$\left(\vec{T} - \vec{T}(\vec{X})\right)^T \Sigma^{-1} \left(\vec{T} - \vec{T}(\vec{X})\right) = \left(\vec{T} - H\frac{\vec{D}}{c}\right)^T \Sigma^{-1} \left(\vec{T} - H\frac{\vec{D}}{c}\right),$$

où

$c$ est la célérité des ondes électromagnétiques,
$\vec{T}(\vec{X})$ est le vecteur modèle (taille P) de l'observation, permettant de relier analytiquement le vecteur de mesures TDOA théorique à la position de l'émetteur $\vec{X}$,
$\vec{D}$ est le vecteur de taille N, dont les composantes sont les distances du point de localisation $\vec{X}$ aux stations,
$H$ : est une matrice rectangulaire P x N déterministe, constituée de 1, de -1 et de 0, permettant de passer des mesures d'instants d'arrivée à des mesures de différences de temps d'arrivée avec la relation analytique suivante

$$\vec{T}\left(\overline{X}\right) = H . \frac{\vec{D}}{c},$$

$\Sigma$ : correspond à la matrice de pondération PxP du critère correspondant à la covariance des P mesures de TDOA.

**4.** - Procédé selon la revendication 3 **caractérisé en ce que** l'on détermine la matrice de covariance $\Sigma$ associée à P mesures TDOA s'écrivant sous la forme générale suivante :

$$\Sigma \approx \Lambda_P (\sigma^2_{TDOA_1},...,\sigma^2_{TDOA_P}) + H\Lambda_N (\sigma^2_{TOA_1},...,\sigma^2_{TOA_N})H^T$$

où :

$\Lambda_P (\sigma^2_{TDOA_1},...,\sigma^2_{TDOA_P})$ désigne une matrice diagonale de taille (PxP) dont les termes diagonaux s'écrivent

$\sigma^2_{TDOA_i}$ avec i allant de 1 à P,

$\sigma^2_{TDOA_i}$ est la variance de la ième mesure TDOA,

$\Lambda_N (\sigma^2_{TOA_1},...,\sigma^2_{TOA_N})$ désigne une matrice diagonale de taille (NxN) dont les termes diagonaux s'écrivent

$\sigma^2_{TOA_i}$ avec i allant de 1 à N,

$\sigma^2_{TOA_i}$ est la variance de la mesure de datation sur la ième station.

**5.** - Procédé selon la revendication 3 **caractérisé en ce que** la matrice de covariance est déterminée en utilisant des mesures de retard d'arrivée et en définissant les termes diagonaux de la matrice de covariance $\Sigma$ correspondant

aux variances de chacune des mesures TDOA avec:

$$Vi = \frac{1}{Nacqui} * \sum_{n=1}^{Nacqui} \left(TDOA_{i,n} - \overline{TDOA_i}\right)^2$$

avec

$N_{acqui}$ le nombre d'acquisitions prises en compte pour le calcul de la variance $TDOA_{i,n}$ correspond à la $n_{ème}$ valeur obtenue à la nième acquisition du ième TDOA correspondant au ième couple de stations $\overline{TDOA_i}$ correspond à la moyenne, sur les $N_{acqui}$ acquisitions des mesures du ième TDOA.

**6.** - Procédé selon l'une des revendications précédentes **caractérisé en ce que** lors de l'étape d'initialisation de la première localisation on calcule la valeur d'initialisation $\vec{X}_0$ à partir d'une information a priori sur la localisation du dispositif émetteur ou à partir de mesures TDOA permettant de déterminer automatiquement une valeur d'initialisation.

**7.** - Procédé selon la revendication 6 **caractérisé en ce que** la valeur d'initialisation $\vec{X}_0$ est déterminée à partir du vecteur de mesures TDOA, par un algorithme pseudo-linéaire PSL, en exécutant les étapes suivantes :

• on choisit une station de référence j celle de plus fort rapport signal sur bruit SNR ou jugée la plus fiable,
• le vecteur d'état inconnu à estimer devient Y=(xsj,ysj,Rsj)$^T$ où Rsj est la distance de l'émetteur et (xsj,ysj) ses coordonnées, référencées par rapport à la station de référence j,
• le vecteur de pseudo-mesures M est constitué de termes s'écrivant : $\frac{1}{2}\left[D_{ij}^2 - \left(cTDOA_{ij}\right)^2\right]$ où $D_{ij}$ est la distance séparant les stations i,j et $TDOA_{ij}$ est le retard mesuré entre les signaux reçus sur ces stations i et j, avec M = A Y, où A est une matrice, constituée des coordonnées des stations relativement à la station j de référence, et des termes ($cTDOA_{ij}$) issus des mesures de retard,
• on estime le vecteur inconnu Y par résolution classique d'un problème de moindres carrés linéaires,
• on vérifie la pertinence des composantes de la solution Y, en vérifiant la cohérence de la distance estimée Rsj avec les coordonnées estimées (xsj,ysj), en vérifiant que Rsj est positif et n'est pas trop éloigné de $\sqrt{x_{sj}^2 + y_{sj}^2}$,
• en cas de pertinence, l'estimation de la position de l'émetteur se déduit directement du vecteur Y,
• en cas de non pertinence, l'algorithme est relancé en utilisant une autre station de référence.

**8.** - Procédé selon l'une des revendications précédentes **caractérisé en ce que** l'on utilise comme algorithme itératif un algorithme pour lequel chaque itération permet de calculer, à partir d'un vecteur $\vec{X}_k$, un nouveau vecteur $\vec{X}_{k+1}$ de la façon suivante :

$$\overrightarrow{x_{k+1}} = \overrightarrow{x_k} + c\ (F^T\ H^T\ \Sigma^{-1}\ H\ F)^{-1}\ F^T\ H^T\ \Sigma^{-1}\ (\vec{T} - \frac{H\ \vec{D}}{c})$$

où F est une matrice jacobienne, calculée au point $\vec{X}_k$, des temps de trajet entre le dispositif émetteur à localiser et les N stations réceptrices, avec :

$$F = \begin{matrix} \dfrac{(\vec{x}_k - \vec{S}_1)^T}{D_1} \\ . \\ . \\ \dfrac{(\vec{x}_k - \vec{S}_N)^T}{D_N} \end{matrix}$$

la ligne *i* de la matrice est le vecteur unitaire dirigé de la station *i* vers l'estimation courante, on calcule cette équation au point $\vec{X}_0$ ce qui fournit un nouveau point de localisation $\vec{X}_1$ qui sera utilisé à l'itération suivante pour obtenir un nouveau point $\vec{X}_2$ qui sera lui-même utilisé pour obtenir un nouveau point jusqu'à détecter une convergence ou une divergence.

9. - Procédé selon l'une des revendications précédentes **caractérisé en ce que** l'on localise le dispositif émetteur à partir d'un ensemble de localisations élémentaires en exécutant les étapes suivantes :

   • à chaque acquisition à partir des K localisations élémentaires,
   • filtrer des valeurs de localisations aberrantes, localisations isolées ou éloignées de la moyenne des localisations obtenues,
   • calculer un barycentre par moyenne des localisations élémentaires retenues, correspondant à une valeur de localisation du dispositif émetteur à localiser,
   • associer à cette valeur une probabilité d'erreur CEP déterminée de la manière suivante : soit un ensemble de localisations élémentaires Locx,y pris pour une acquisition, B le barycentre des localisations Locx,y retenues, CEP 50% de Locx,y est le rayon du cercle, centré sur B, qui contient la moitié des localisations de Locx,y.

10. - Procédé selon l'une des revendications 1 à 8 **caractérisé en ce que** l'on localise le dispositif émetteur à partir d'un ensemble de localisations élémentaires en exécutant les étapes suivantes :

    • au bout de $N_{acqui}$ acquisitions et dans le cas stationnaire,
    • filtrer des valeurs de localisations aberrantes, localisations isolées ou éloignées de la moyenne des localisations obtenues,
    • calculer un barycentre par moyenne des localisations élémentaires retenues, correspondant à une valeur de localisation du dispositif émetteur à localiser,
    • associer à cette valeur une probabilité d'erreur CEP déterminée de la manière suivante : soit un ensemble de localisations élémentaires Locx,y pris pour une acquisition, B le barycentre des localisations Locx,y retenues, CEP 50% de Locx,y est le rayon du cercle, centré sur B, qui contient la moitié des localisations de Locx,y.

11. - Système pour localiser un dispositif émetteur (20i) à partir de N stations (10j) dans un réseau de communications, chacune des stations étant équipées d'au moins un récepteur (12), en utilisant au moins un référentiel de datation commun à toutes les N stations, **caractérisé en ce que** le réseau comprend au moins une station maître (1) adaptée à exécuter les étapes du procédé selon l'une des revendications 1 à 9.


**Patentansprüche**

1. Verfahren zum Lokalisieren eines Sendegeräts (20i) auf der Basis von N Stationen (10j) in einem Kommunikationsnetz, wobei jede der Stationen mit wenigstens einem Empfänger (12) ausgestattet ist, unter Nutzung von wenigstens einer allen N Stationen gemeinsamen Datierungsreferenz, wobei das Netzwerk wenigstens eine Master-Station (1) umfasst, ausgelegt zum Verwalten von Ankunftszeitmesswerten, **dadurch gekennzeichnet, dass** es wenigstens die folgenden Schritte beinhaltet:

   • Auslösen von einer oder mehreren auf N Stationen synchronisierten Erfassungen für eine gegebene Frequenz, eine Bandbreite und einen gegebenen Zeitpunkt t, wobei die Werte in Abhängigkeit von einem Sendegerät von Interesse gewählt werden, **gekennzeichnet durch** seine Frequenz, seine Bandbreite,

• für eine Erfassung:

• Berechnen der N(N-1)/2 Messwerte für Ankunftszeitverzögerung TDOA zwischen allen N(N-1)/2 Stationspaaren,
• Auswählen einer Anzahl P von Messwerten unter den M=N(N-1)/2 Messwerten, wobei 3<P<N(N-1)/2 ist, und Bilden von K Messwertvektoren, die mit den K möglichen Kombinationen von P unter M assoziiert sind, wobei:

$$K = \frac{M!}{P!(M-P)!}$$

• für jeden der K Vektoren Schätzen eines elementaren Lokalisierungswertes des Sendegeräts durch Minimieren eines quadratischen Kriteriums, das eine Matrix entsprechend der Kovarianz von P Messwerten von Ankunftszeitverzögerung berücksichtigt, und durch Iteration ausgehend von einem ersten Wert eines Vektors $\vec{X}_0$ der Anfangsposition des Senders, wobei sich die Position auch so nahe wie möglich an dem gesuchten Minimum befindet, dann durch Iterieren der ersten Schätzung, indem man sukzessiv Lokalisationen schätzt, die es zulassen, das zu minimierende Kriterium bis zum Verifizieren eines Schwellenwertes zu verringern,
• Berechnen eines fusionierten Lokalisierungswertes auf der Basis der Schätzwerte der elementaren Lokalisierung.

2. Verfahren nach Anspruch 1, **dadurch gekennzeichnet, dass** in einem stationären Fall für quasi unbewegliche Stationen das Verfahren ferner einen Schritt des Berechnens einer Lokalisierung auf der Basis aller für alle Erfassungen geschätzten elementaren Lokalisierungen beinhaltet.

3. Verfahren nach Anspruch 1 oder 2, **dadurch gekennzeichnet, dass** zum Schätzen eines Lokalisierungswertes ein quadratisches Kriterium minimiert wird, definiert als:

$$\left(\vec{T} - \vec{T}(\vec{X})\right)^T \Sigma^{-1} \left(\vec{T} - \vec{T}(\vec{X})\right) = \left(\vec{T} - H\frac{\vec{D}}{c}\right)^T \Sigma^{-1} \left(\vec{T} - H\frac{\vec{D}}{c}\right),$$

wobei

c die Geschwindigkeit der elektromagnetischen Wellen ist,
$\vec{T}(\vec{X})$ der modellierte Vektor (Größe P) der Beobachtung ist, der eine analytische Verbindung des theoretischen TDOA-Messwertvektors mit der Position des Senders $\vec{X}$ zulässt,
$\vec{D}$ der Größenvektor N ist, dessen Komponenten die Distanzen des Lokalisierungspunkts $\vec{X}$ zu den Stationen ist,
H: eine rechteckige deterministische Matrix P x N ist, gebildet von 1, -1 und 0, die das Leiten von Ankunftszeitmesswerten zu Messwerten von Ankunftszeitdifferenzen mit der folgenden analytischen Relation zulässt:

$$\vec{T}(\overline{X}) = H.\frac{\vec{D}}{c},$$

$\Sigma$ : entspricht der Gewichtungsmatrix PxP des Kriteriums entsprechend der Kovarianz von P TDOA-Messwerten.

4. Verfahren nach Anspruch 3, **dadurch gekennzeichnet, dass** die mit P TDOA-Messwerten assoziierte Kovarianzmatrix $\Sigma$ die folgende allgemeine Formel erfüllt:

$$\Sigma \approx \Lambda_P (\sigma^2_{TDOA_1},...,\sigma^2_{TDOA_P}) + H\Lambda_N (\sigma^2_{TOA_1},...,\sigma^2_{TOA_N})H^T$$

wobei:

$\Lambda_P (\sigma^2_{TDOA_1},...,\sigma^2_{TDOA_P})$ eine diagonale Größenmatrix (PxP) bezeichnet, deren Diagonalterme $\sigma^2_{TDOA_i}$ entsprechen, wobei i im Bereich von 1 bis P ist,

$\sigma^2_{TDOA_i}$ die Varianz des i-ten TDOA-Messwertes ist,

$\Lambda_N (\sigma^2_{TOA_1},...,\sigma^2_{TOA_N})$ eine diagonale Größenmatrix (NxN) bezeichnet, deren Diagonalterme $\sigma^2_{TOA_i}$ entsprechen, wobei i im Bereich von 1 bis N liegt,

$\sigma^2_{TOA_i}$ die Varianz des Datierungsmesswerts auf der i-ten Station ist.

5. Verfahren nach Anspruch 3, **dadurch gekennzeichnet, dass** die Kovarianzmatrix unter Verwendung der Ankunftsverzögerungsmesswerte und unter Definieren der Diagonalterme der Kovarianzmatrix $\Sigma$ entsprechend den Varianzen von jedem der TDOA-Messwerte bestimmt wird, mit:

$$Vi = \frac{1}{Nacqui} * \sum_{n=1}^{Nacqui} \left(TDOA_{i,n} - \overline{TDOA_i}\right)^2$$

wobei

$N_{acqui}$ die Anzahl von Erfassungen, die für die Berechnung der Varianz $TDOA_{i,n}$ berücksichtigt werden, dem n-ten Wert entspricht, erhalten bei der n-ten Erfassung des i-ten TDOA entsprechend dem i-ten Stationspaar; $\overline{TDOA_i}$ dem Mittelwert über die $N_{acqui}$ Erfassungen der Messungen des i-ten TDOA entspricht.

6. Verfahren nach einem der vorherigen Ansprüche, **dadurch gekennzeichnet, dass** während des Initialisierungsschrittes der ersten Lokalisierung der Initialisierungswert $\vec{X}_0$ auf der Basis einer A-priori-Information über die Lokalisierung des Sendegeräts oder auf der Basis von TDOA-Messwerten berechnet wird, die eine automatische Bestimmung eines Initialisierungswertes zulassen.

7. Verfahren nach Anspruch 6, **dadurch gekennzeichnet, dass** der Initialisierungswert $\vec{X}_0$ auf der Basis des TDOA-Messwertvektors mit einem pseudolinearen Algorithmus PSL unter Ausführung der folgenden Schritte bestimmt wird:

• Wählen einer Referenzstation j mit dem stärksten Signal-Rausch-Verhältnis SNR oder die als am schwächsten eingestuft wird,
• der zu schätzende unbekannte Zustandsvektor wird Y=(xsj,ysj,Rsj)$^T$, wobei Rsj die Distanz vom Sender ist und (xsj, ysj) seine Koordinaten sind, referenziert mit Bezug auf die Referenzstation j,
• der Pseudo-Messwertvektor M besteht aus Termen, die folgendermaßen ausgedrückt werden: $\frac{1}{2}\left[D_{ij}^2 - \left(cTDOA_{ij}\right)^2\right]$, wobei $D_{ij}$ die Distanz ist, die die Stationen i,j trennt und $TDOA_{ij}$ die zwischen den an diesen Stationen i und j empfangenen Signalen gemessene Verzögerung ist, wobei M = A Y, wobei A eine Matrix ist, gebildet von Koordinaten der Stationen relativ zur Referenzstation j, und aus den Termen ($cTDOA_{ij}$) aus Verzögerungsmesswerten,
• der unbekannte Vektor Y wird durch klassisches Auflösen eines Problems von linearen kleinsten Quadraten geschätzt,
• die Relevanz der Komponenten der Auflösung Y wird verifiziert durch Verifizieren der Kohärenz der geschätzten Distanz Rsj mit den geschätzten Koordinaten (xsj, ysj), wobei verifiziert wird, dass Rsj positiv und nicht zu weit von $\sqrt{x_{sj}^2 + y_{sj}^2}$ entfernt ist,
• im Fall von Relevanz wird die Schätzung der Position des Senders direkt vom Vektor Y abgeleitet,
• im Fall von Nichtrelevanz wird der Algorithmus erneut unter Nutzung einer anderen Referenzstation gestartet.

8. Verfahren nach einem der vorherigen Ansprüche, **dadurch gekennzeichnet, dass** als iterativer Algorithmus ein Algorithmus verwendet wird, für den jede Iteration das Berechnen, auf der Basis eines Vektors $\vec{X}_k$, eines neuen Vektors $\vec{X}_{k+1}$ auf die folgende Weise zulässt:

$$\overrightarrow{x_{k+1}} = \overrightarrow{x_k} + c \, (F^T \, H^T \, \Sigma^{-1} \, H \, F)^{-1} \, F^T \, H^T \, \Sigma^{-1} \, (\vec{T} - \frac{H \, \vec{D}}{c})$$

wobei F eine Jakobimatrix, berechnet am Punkt $\vec{X}_k$, von Laufzeiten zwischen dem zu lokalisierenden Sendegerät und den N Empfangsstationen ist, mit:

$$F = \begin{array}{c} \dfrac{(\vec{x}_k - \vec{S}_1)^T}{D_1} \\ . \\ . \\ \dfrac{(\vec{x}_k - \vec{S}_N)^T}{D_N} \end{array}$$

die Linie *i* der Matrix ist der von der Station *i* zur laufenden Schätzung gerichtete Einheitsvektor,
diese Gleichung wird am Punkt $\vec{X}_0$ berechnet, was einen neuen Lokalisierungspunkt $\vec{X}_1$ ergibt, der bei der folgenden Iteration benutzt wird, um einen neuen Punkt $\vec{X}_2$ zu erhalten, der wiederum benutzt wird, um einen neuen Punkt zu erhalten, bis eine Konvergenz oder eine Divergenz erkannt wird.

9. Verfahren nach einem der vorherigen Ansprüche, **dadurch gekennzeichnet, dass** das Sendegerät auf der Basis eines Satzes von elementaren Lokalisierungen unter Ausführung der folgenden Schritte lokalisiert wird:

   • bei jeder Erfassung auf der Basis der K elementaren Lokalisierungen,
   • Filtern der Werte von abweichenden Lokalisierungen, isolierten oder vom Mittelwert der erhaltenen Lokalisierungen abweichenden Lokalisierungen,
   • Berechnen eines Baryzentrums mittels der behaltenen elementaren Lokalisierungen, entsprechend einem Lokalisierungswert des zu lokalisierenden Sendegeräts,
   • Assoziieren einer Fehlerwahrscheinlichkeit CEP mit diesem Wert, bestimmt auf die folgende Weise: es sei ein Satz von elementaren Lokalisierungen Locx,y, erhalten für eine Erfassung, B das Baryzentrum der behaltenen Lokalisierungen Locx,y, CEP 50 % von Locx,y ist der Radius des Kreises, auf B zentriert, der die Hälfte der Lokalisierungen von Locx,y enthält.

10. Verfahren nach einem der Ansprüche 1 bis 8, **dadurch gekennzeichnet, dass** das Sendegerät auf der Basis eines Satzes von elementaren Lokalisierungen unter Ausführung der folgenden Schritte lokalisiert wird:

   • nach $N_{acqui}$ Erfassungen und im stationären Fall,
   • Filtrieren von Werten von abweichenden Lokalisierungen, isolierten oder vom Mittelwert der erhaltenen Lokalisierungen entfernten Lokalisierungen,
   • Berechnen eines Baryzentrums mittels der behaltenen elementaren Lokalisierungen entsprechend einem Lokalisierungswert des zu lokalisierenden Sendegeräts,
   • Assoziieren einer Fehlerwahrscheinlichkeit CEP mit diesem Wert, bestimmt auf die folgende Weise: es sei ein Satz von elementaren Lokalisierungen Locx,y, erhalten für eine Erfassung, B das Baryzentrum der behaltenen Lokalisierungen Locy,y, CEP 50 % von Locx,y ist der Radius des Kreises, zentriert auf B, der die Hälfte der Lokalisierungen von Locx,y enthält.

11. System zum Lokalisieren eines Sendegeräts (20i) auf der Basis von N Stationen (10j) in einem Kommunikationsnetz, wobei jede der Stationen mit wenigstens einem Empfänger (12) ausgestattet ist, unter Nutzung von wenigstens einer allen N Stationen gemeinsamen Datierungsreferenz, **dadurch gekennzeichnet, dass** das Netzwerk wenigstens eine Master-Station (1) umfasst, ausgelegt zum Ausführen der Schritte des Verfahrens nach einem der Ansprüche 1 bis 9.

**Claims**

1.  - Method for locating a transmitter device (20i) on the basis of N stations (10j) in a communications network, each of the stations being equipped with at least one receiver (12), by using at least one dating reference frame common to all the N stations, the network comprising at least one master station (1) adapted to manage measurements of instant of arrival, **characterized in that** it comprises at least the following steps:

    • triggering one or more synchronized acquisitions on N stations for a given frequency, a bandwidth and a given instant t, the said values being chosen as a function of a transmitter device of interest **characterized by** its frequency, its bandwidth,
    • for an acquisition:

    • calculating the N(N-1)/2 measurements of arrival time delay TDOA between all the N(N-1)/2 pairs of stations,
    • choosing a number P of measurements out of the M=N(N-1)/2 measurements, with 3<P<N(N-1)/2 and forming K vectors of measurements associated with the K possible combinations of P out of M with:

    $$K = \frac{M\,!}{P\,!(M-P)!}$$

    • for each of the K vectors, estimating an elementary value of location of the transmitter device by minimizing a quadratic criterion taking into account a matrix corresponding to the covariance of the P measurements of arrival time delay and by iteration starting from a first value of a vector $\vec{X}_0$ of initial position of the transmitter, the position is situated as near as possible to the desired minimum and then by iterating on the first estimation by successively estimating locations making it possible to decrease the criterion to be minimized until a threshold value is satisfied,
    • calculating a merged location value on the basis of the estimated values of elementary location.

2.  - Method according to Claim 1, **characterized in that** in a stationary case for quasi-motionless stations, the method moreover comprises a step of calculating a location from the basis of all the elementary locations estimated for all the acquisitions.

3.  - Method according to one of Claims 1 and 2, **characterized in that** to estimate a location value, we minimize a quadratic criterion defined as:

    $$\left(\vec{T} - \vec{T}(\vec{X})\right)^T \Sigma^{-1} \left(\vec{T} - \vec{T}(\vec{X})\right) = \left(\vec{T} - H\frac{\vec{D}}{c}\right)^T \Sigma^{-1} \left(\vec{T} - H\frac{\vec{D}}{c}\right),$$

    where

    ***c*** is the speed of the electromagnetic waves,
    $\vec{T}(\vec{X})$ is the model vector (size P) of the observation, making it possible to analytically link the theoretical vector of TDOA measurements to the position of the transmitter $\vec{X}$,
    $\vec{D}$ is the vector of size N, whose components are the distances of the location point $\vec{X}$ from the stations,
    ***H****:* is a deterministic P x N rectangular matrix, consisting of 1, of -1 and of 0, making it possible to pass from the measurements of instants of arrival to measurements of differences of arrival times with the following analytical

    $$\vec{T}(\overline{X}) = H.\frac{\vec{D}}{c},$$
    relation
    $\Sigma$**:** corresponds to the PxP weighting matrix of the criterion corresponding to the covariance of the P measurements of TDOA.

4.  - Method according to Claim 3, **characterized in that** the covariance matrix $\Sigma$ associated with P measurements of TDOA is determined, written in the following general form:

$$\Sigma \approx \Lambda_P (\sigma^2_{TDOA_1},...,\sigma^2_{TDOA_P}) + H\Lambda_N (\sigma^2_{TOA_1},...,\sigma^2_{TOA_N})H^T$$

where:

$\Lambda_P (\sigma^2_{TDOA_1},...,\sigma^2_{TDOA_P})$ designates a diagonal matrix of size (PxP) whose diagonal terms are written $\sigma^2_{TDOA_i}$ with i ranging from 1 to P,

$\sigma^2_{TDOA_i}$ is the variance of the ith measurement of TDOA,

$\Lambda_N (\sigma^2_{TOA_1},...,\sigma^2_{TOA_N})$ designates a diagonal matrix of size (NxN) whose diagonal terms are written $\sigma^2_{TOA_i}$ with i ranging from 1 to N,

$\sigma^2_{TOA_i}$ is the variance of the dating measurement on the ith station.

**5.** - Method according to Claim 3, **characterized in that** the covariance matrix is determined using arrival delay measurements and by defining the diagonal terms of the covariance matrix $\Sigma$ corresponding to the variances of each of the TDOA measurements with:

$$Vi = \frac{1}{Nacqui} * \sum_{n=1}^{Nacqui} \left(TDOA_{i,n} - \overline{TDOA_i}\right)^2$$

with

$N_{acqui}$ being the number of acquisitions taken into account for the calculation of the variance
$TDOA_{i,n}$ corresponds to the $n_{th}$ value obtained at the nth acquisition of the ith TDOA corresponding to the ith pair of stations
$\overline{TDOA_i}$ corresponds to the average, over the $N_{acqui}$ acquisitions of the measurements of the ith TDOA.

**6.** - Method according to one of the preceding claims, **characterized in that** during the step of initializing the first location, the initialization value $\vec{X}_0$ is calculated on the basis of a priori information about the location of the transmitter device or on the basis of TDOA measurements making it possible to determine an initialization value automatically.

**7.** - Method according to Claim 6, **characterized in that** the initialization value $\vec{X}_0$ is determined on the basis of the vector of TDOA measurements, with a pseudo-linear algorithm PSL, by executing the following steps:

• a reference station j, that of greatest signal-to-noise ratio SNR or deemed the most reliable, is chosen,
• the unknown state vector to be estimated becomes Y=(xsj,ysj,Rsj)$^T$ where Rsj is the distance of the transmitter and (xsj,ysj) its coordinates, referenced with respect to the reference station j,
• the vector of pseudo-measurements M consists of terms that may be written: $\frac{1}{2}\left[D_{ij}^2 - \left(cTDOA_{ij}\right)^2\right]$ where $D_{ij}$ is the distance separating the stations i,j and TDOA$_{ij}$ is the measured delay between the signals received at these stations i and j, with M = A Y, where A is a matrix, consisting of the coordinates of the stations in relation to the reference station j, and of the terms ($cTDOA_{ij}$) arising from the delay measurements,
• the unknown vector Y is estimated by conventional solution of a linear least squares problem,
• the relevance of the components of the solution Y is verified, by verifying the consistency of the estimated distance Rsj with the estimated coordinates (xsj,ysj), by verifying that Rsj is positive and is not too far from $\sqrt{x_{sj}^2 + y_{sj}^2}$,
• in case of relevance, the estimation of the position of the transmitter is deduced directly from the vector Y,
• in case of non-relevance, the algorithm is relaunched while using another reference station.

**8.** - Method according to one of the preceding claims, **characterized in that**, as iterative algorithm, use is made of an algorithm for which each iteration makes it possible to calculate, on the basis of a vector $\vec{X}_k$, a new vector $\vec{X}_{k+1}$ in the following manner:

$$\overrightarrow{x_{k+1}} = \overrightarrow{x_k} + c\ (F^T\ H^T\ \Sigma^{-1}\ H\ F)^{-1}\ F^T\ H^T\ \Sigma^{-1}\ (\vec{T} - \frac{H\ \vec{D}}{c})$$

where F is a jacobian matrix, calculated at the point $\vec{X}_k$, of the journey times between the transmitter device to be located and the N receiving stations, with:

$$F = \begin{matrix} \dfrac{(\vec{x}_k - \vec{S}_1)^T}{D_1} \\ . \\ . \\ \dfrac{(\vec{x}_k - \vec{S}_N)^T}{D_N} \end{matrix}$$

row *i* of the matrix is the unit vector directed from station *i* towards the current estimation, this equation is calculated at the point $\vec{X}_0$ thereby providing a new location point $\vec{X}_1$ which will be used at the following iteration to obtain a new point $\vec{X}_2$ which will itself be used to obtain a new point until convergence or divergence is detected.

9. - Method according to one of the preceding claims, **characterized in that** the transmitter device is located on the basis of a set of elementary locations by executing the following steps:

   • at each acquisition on the basis of the K elementary locations,
   • filter values of aberrant locations, isolated locations or ones which are far from the average of the locations obtained,
   • calculate a barycentre by averaging the elementary locations retained, corresponding to a value of location of the transmitter device to be located,
   • associate with this value a probability of error CEP determined in the following manner: consider a set of elementary locations Locx,y taken for an acquisition, B the barycentre of the locations Locx,y retained, CEP 50% of Locx,y is the radius of the circle, centred on B, which contains half the locations of Locx,y.

10. - Method according to one of Claims 1 to 8, **characterized in that** the transmitter device is located on the basis of a set of elementary locations by executing the following steps:

   • after $N_{acqui}$ acquisitions and in the stationary case,
   • filter values of aberrant locations, isolated locations or ones which are far from the average of the locations obtained,
   • calculate a barycentre by averaging the elementary locations retained, corresponding to a value of location of the transmitter device to be located,
   • associate with this value a probability of error CEP determined in the following manner: consider a set of elementary locations Locx,y taken for an acquisition, B the barycentre of the locations Locx,y retained, CEP 50% of Locx,y is the radius of the circle, centred on B, which contains half the locations of Locx,y.

11. - System for locating a transmitter device (20i) on the basis of N stations (10j) in a communications network, each of the stations being equipped with at least one receiver (12), by using at least one dating reference frame common to all the N stations, **characterized in that** the network comprises at least one master station (1) adapted to execute the steps of the method according to one of Claims 1 to 9.

## FIG.1

O Barycentre     ● Localisation

## FIG.2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20060273960 A
- US 20110170444 A